# EUROPEAN PATENT SPECIFICATION

(11) **EP 4 103 941 B1**
(45) Date of publication and mention of the grant of the patent: **22.04.2026**
(21) Application number: 21708940.8
(22) Date of filing: 12.02.2021
(51) Int. Cl.: G01N 29/04, G01H 9/00, G01N 21/17, G01N 29/11, G01N 29/22, G01N 29/24, G01N 29/44

(54) **SYSTEM AND METHOD FOR ANALYSING AN OBJECT**
SYSTEM UND VERFAHREN ZUR ANALYSE EINES OBJEKTS
SYSTÈME ET PROCÉDÉ D'ANALYSE D'UN OBJET

(30) Priority: 14.02.2020 NO 20200190
(43) Date of publication of application: 21.12.2022
(73) Proprietor: Optonor AS, 7041 Trondheim (NO)
(72) Inventor: VIKHAGEN, Eiolf, 7041 Trondheim (NO)
(74) Representative: Dehns
(86) International application number: PCT/EP2021/053465
(87) International publication number: WO 2021/160808

(56) References cited:
- WO-A1-2010/040719
- WO-A1-2011/131252
- DE-A1- 102015 114 855
- DE-A1- 102015 114 855
- FR-A1- 2 937 136
- FR-A1- 2 937 136
- US-A- 4 928 527
- US-A- 4 928 527
- US-A- 5 841 031
- US-A- 5 841 031
- US-A1- 2004 003 662
- US-A1- 2004 003 662
- US-A1- 2013 036 820
- US-A1- 2013 036 820
- US-A1- 2016 282 308
- US-A1- 2016 282 308
- US-A1- 2018 340 858
- US-A1- 2018 340 858
- US-B1- 6 363 788
- US-B1- 6 363 788
- US-B1- 7 798 000
- US-B1- 7 798 000
- US-B2- 7 516 662
- US-B2- 7 516 662
- CASTAINGS M ET AL: "THE GENERATION, PROPAGATION, AND DETECTION OF LAMB WAVES IN PLATES USING AIR-COUPLED ULTRASONIC TRANSDUCERS", THE JOURNAL OF THE ACOUSTICAL SOCIETY OF AMERICA, AMERICAN INSTITUTE OF PHYSICS, 2 HUNTINGTON QUADRANGLE, MELVILLE, NY 11747, vol. 100, no. 5, 1 November 1996 (1996-11-01), pages 3070 - 3077, XP000641680, ISSN: 0001-4966, DOI: 10.1121/1.417193
- CASTAINGS M ET AL: "THE GENERATION, PROPAGATION, AND DETECTION OF LAMB WAVES IN PLATES USING AIR-COUPLED ULTRASONIC TRANSDUCERS", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, vol. 100, no. 5, 1 November 1996 (1996-11-01), pages 3070 - 3077, XP000641680, ISSN: 0001-4966, DOI: 10.1121/1.417193

## Description

### Background

This invention relates to methods and systems for analysing an object using vibrations to determine a defect existing in a surface between an excitation surface of the object and a measurement surface of the object.

It is known to use laser light to analyse objects, such as for the non-destructive testing of machine parts-for example, electronic speckle pattern interferometry (ESPI), electronic shearography, and laser Doppler vibrometry (LDV).

The applicant's earlier patent applications WO 2006/001712 and WO 2014/088424 describe various techniques for using optical interferometry to analyse objects that are subjected to a static deflection or that are caused to vibrate. WO2019/229473 discloses a system to excite an object at a vibration frequency to induce a wave on the surface of the object and use an optical interferometer to determine vibrational amplitude and phase of on a measurement surface of the object relative to a reference phase. A processing system uses a spatial derivative filter to the vibration phase data, and the resulting spatial-derivate-of-phase data is processed to determine a property of the object in the measurement surface. These methods are very useful when defects existing in the object is within the measurement surface, i.e. within view of the optical interferometer. However, parts of the object are often covered with an opaque material, in which case defects below the opaque material cannot be detected using the prior art methods.

US 2013/0036820 discloses a method and installation for inspecting a butt weld of transverse ends of metal strips held together between first and second jaws along the ends. The method includes using laser pulses to generate ultrasound waves on one surface of the first strip which pass through the weld and emerge from the surface of the second strip. Weld inspection characteristics are identified by analyzing the operating state related to the pulses and a measurement of a signature of a vibration state of the surface of the second strip upon emergence of the waves.

The present inventor has realised, however, that it is possible to apply the known measurement technology to also identify defects existing in an area outside the measurement surface.

Thus in a first aspect, the invention provides a method of analysing an object according to claim 1. From a further aspect, the invention provides a system for analysing an object according to claim 15.

The object may be any single or compound object, such as a composite panel or polymer gas bottle, vehicle body panel, an aircraft structure, a turbine blade, an oil pipeline, a bolt, a musical instrument, etc. The method may be used to identify faults or imperfections in the object. The object may be a composite structure, such as a polymer and/or metal composite structure. The object may be a metallic structure, whose thickness may vary due to corrosion. The analysis may be used to identify corrosion, de-laminations, de-bonds, impact damage, material cracks, flaws or other weaknesses, or to detect loose components e.g. in bolted or riveted structures.

The object may be excited in any appropriate way. The system may comprise means (e.g., an exciter) for exciting the object, preferably at the vibration frequency, so as to induce the travelling wave on the surface of the object-e.g., by an acoustic signal or by direct mechanical excitation. The excitation may create a plurality of travelling waves on the surface of the object, which may have a common wavelength or different wavelengths. The plurality of travelling waves may be excited simultaneously or sequentially. The object may be excited by an exciter, such as an electro-mechanical actuator-e.g., a piezoelectric transducer. The exciter may be in contact with the object, or may be coupled to the object through a fluid medium such as air. For a substantially planar object, the object may be excited in an in-plane direction or in an out-of-plane direction. The vibration frequency may be an audible frequency, an infrasonic frequency, or an ultrasonic frequency. The exciter could vibrate the surface at a plurality of frequencies, e.g., using white noise; however, single-frequency excitation at the vibration frequency may be preferred at least in some embodiments. The exciter may be external to the object, or it may be part of the object-e.g., being embedded in the object. The may be a plurality of excitation sources, e.g., at different locations on or adjacent the object. The vibration frequency preferably induces a harmonic vibration.

In one embodiment, the excitation surface may comprise a single point or a plurality of points. The plurality of points may be arranged in a line, or a two-dimensional geometrical shape. The plurality of points may be phased-controlled in relation to one another creating a phased array of excitation points. Exemplary two-dimensional shapes include, but are not limited to squares, rectangles, rhombuses, parallelograms, trapezoids, triangles, and all other kinds of regular and irregular polygons. The plurality of waves may be introduced having different shapes and/or propagation directions. The plurality of waves may be collimated, diverging or converging. Collimated, diverging or converging wave front may be created using the phased array of excitation points.

The surface of the object may be continuous or discontinuous. It may be planar, curved, bent or shaped in any way. The wave, or a plurality of waves, may be induced on part or all of the surface. It will be appreciated that, while the vibration at the surface of the object is used for measurement purposes, in practice it is not just the surface that moves-the object beneath the surface will also be involved in the vibration. In some cases, the entire object may vibrate.

In one embodiment, the change in the at least one wave property of the at least one wave may comprise a reduced wave amplitude or no detectable wave.

In one embodiment, the change in the at least one wave property of the at least one wave may comprise a non-spherical or non-planar wave-front.

In one embodiment, the change in the at least one wave property may comprise a second wave having a second propagation direction different from a propagation direction of the induced wave.

In one embodiment, the method may further comprise:
exciting a calibration object at the vibration frequency so as to induce at least one wave, having the vibration frequency, on an excitation surface of the calibration object;
propagate the at least one wave into an analysis surface of the calibration object;
measuring vibration data on a measurement surface of the calibration object, the measurement surface being spatially separated from the excitation surface of the calibration object by the analysis surface of the calibration object;
processing the vibration data to determine a calibrated wave propagation for the calibration object; and
wherein the change in the at least one wave property of the at least one wave comprises a wave propagation differing from the calibrated wave propagation.

In one embodiment, the excitation and measurement may be performed at a plurality of frequencies.

In one embodiment, the excitation and measurement may be performed using in-plane excitation, out-of-plane excitation or a combination of both.

In one embodiment, the measuring of vibration data may comprise measuring an amplitude and a phase. In other embodiments, the measuring of vibration data may comprise measuring either amplitude or phase.

In one embodiment, the measuring of vibration data comprises using electronic speckle pattern interferometry (ESPI)or electronic shearography to determine the vibration data.In one embodiment at least a part of the analysis surface of the object is covered by an opaque material.

The vibration data may be acquired for any number of points over the measurement surface e.g., tens, hundreds, thousands or millions of points. The points may be uniformly spaced, in one or two dimensions, over the surface of the object, or over an image plane of an optical-interference-based measurement apparatus. For example, the points may correspond to pixels in an imaging sensor. The vibration data may be stored in a digital memory of the processing system.

The processing system may take any suitable form. It may comprise one or more processors, FPGAs, ASICs, DSPs, discrete electronic components, etc. It may comprise volatile and/or non-volatile memory. The processing steps disclosed herein may be implemented entirely in hardware (e.g., using physical logic gates), or entirely in software, or a combination of the two. The processing system may be in one unit or it may be distributed-e.g., over a network. It may comprise hardware and/or software

### Brief description of the drawings

Certain preferred embodiments of the invention will now be described, by way of example only, with reference to the accompanying drawings, in which:
Figure 1 is a schematic view of an interferometric analysis system embodying the invention;
Figure 2 is a schematic illustration of an analysis system of the present invention;
Figure 3 is schematic illustration of an analysis system of the present invention;
Figure 4 is an exemplary flowchart for a method of the present invention; and
Figure 5 is an exemplary result of an interferometric analysis of the present invention.

### Description of the invention

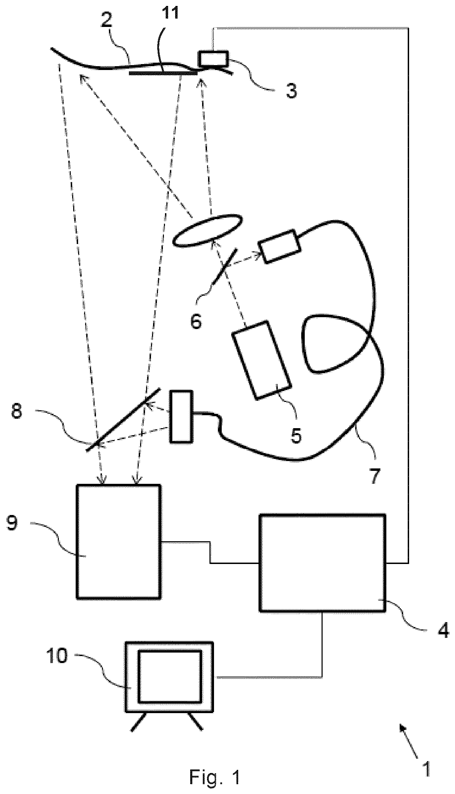

Figure 1 shows an interferometric analysis system 1 for analysing an object 2. The system 1 uses vibration-analysis ESPI.

A surface of the object 2 is made to vibrate at a driving frequency by a ceramic piezoelectric exciter 3 which is coupled to the object 2. The exciter is controlled by a processing system 4, to which it is coupled. Alternatively, the object 2 could be excited by an air-coupled transducer, or using an excitation unit embedded in the structure under evaluation (e.g., a piezo unit integrated in the structure during production of the structure), or in any other appropriate way.

The measurement device in the case of vibration-analysis ESPI comprises a plurality of devices. A laser 5 emits light towards the object 2. The light passes a beam-splitter 6, which diverts a reference-beam portion through a fibre optic cable 7 to a beam-combiner 8. The beam-combiner 8 combines the reference beam with laser light reflected off the surface of the object 2. A camera 9 captures the interference pattern between the two light paths. Exemplary light beams are represented by dashed lines in Figure 1.

Video data from the camera 9 is passed to the processing system 4, which processes the data in one or more of the ways described below. The processing system 4 is connected to a display screen 10 for outputting a graphical representation of the processed data to a human user.

In other embodiments, the system 1 may comprise a projection system for projecting graphical output from the processing system 4 back onto the surface of the object 2, as described in the applicant's earlier application WO2017/085457
In other embodiments, the system may be configured to use shearography, instead of ESPI. In this measurement device, the beam-splitter 6, fibre optic cable 7 and beam-combiner 8 will be dispensed with. Instead, a beam-splitter, a reference mirror, and a shearing mirror will be provided in front of the camera 9, so that light from the object 2 interferes with a spatially-offset copy of the same light.

Some or all of these components of the system 1 may be contained in a common housing (not shown). In some embodiments, the processing system 4 and/or display screen 10 may be remote from other components of the system 1-e.g. the processing may be performed by a networked server, which could be located in a different room or building from the object 2.

The processing system 4 uses an appropriate algorithm to calculate vibration amplitude data and/or vibration phase data, for points on the surface of the object 2, from the image data output by the camera 9. In the case of ESPI, this data describes the vibration of the object 2 directly (i.e., based on the changes in axial distance between the object 2 and the camera 9), whereas in the case of shearography the data relates to a gradient (spatial derivative) in the shearing direction, because shearography captures differences in distance between a point on the surface and a neighboring point, rather than measuring changes in distance for each point independently as in ESPI. The details of the calculations are described in applicant's earlier application WO2019/229473.

In one arrangement, a heterodyning approach may be used, whereby both the object vibration and the reference wave are excited by a system signal generator. In other embodiments, fringe analysis, such as Fourier analysis, may be performed.

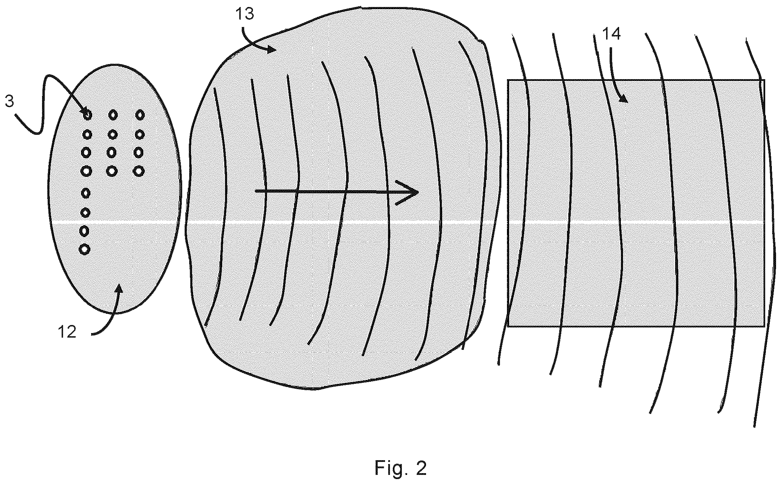

Figure 1 furthermore shows that at least a part of the analysis surface of the object 2 is covered by an opaque material 11. Defects below the opaque material is out of view of the optical interferometer, and a new methodology is applied to determine that such defects exists as will be disclosed with reference to Figure 2. This methodology is not only applicable when parts of the object 2 is below an opaque material, but is suitable in any situations where the field of view/measurement surface of the measurement device is spatially separated from the analysis area.

Figure 2 shows a schematic illustration of a system for analysing the object 2. The exciter 3 excites the object 2 at a vibration frequency so as to induce at least one wave, having the vibration frequency, on an excitation surface 12 of the object, such that the at least one wave is propagated into an analysis surface 13 of the object. The processing system 4 controls the exciters 2, and may use an appropriate algorithm to calculate excitation amplitude data and/or excitation phase data. A vibration measuring device, such as those discussed above, measures vibration on a measurement surface 14 of the object, the measurement surface 14 being spatially separated from the excitation surface 12 of the object by the analysis surface 13 of the object 2. Figure 2 shows for ease of understanding that the analysis surface 13 may be in-line between the excitation surface 12 and the measurement surface 14. However, the analysis surface 13 may be any surface of the object 2 influenced by the propagation of the at least one wave, either directly or in-directly, e.g. in form of reflected waves from edges or other structural elements of the object 2

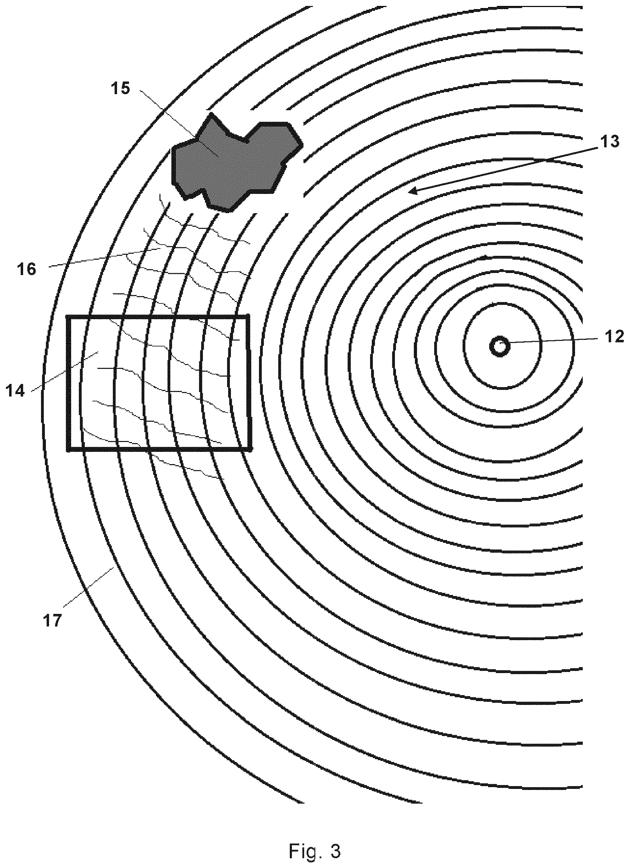

Figure 3 shows another schematic illustration of the system for analysing the object 2. An exemplary wave propagation is illustrated for an object 2 having a defect 15 that is not in-line between the excitation surface 12 and the measurement surface 14. Vibrations measured on the measurement surface 14 includes both vibrations from undisturbed waves 17 and reflected waves 16 from the defect 15.

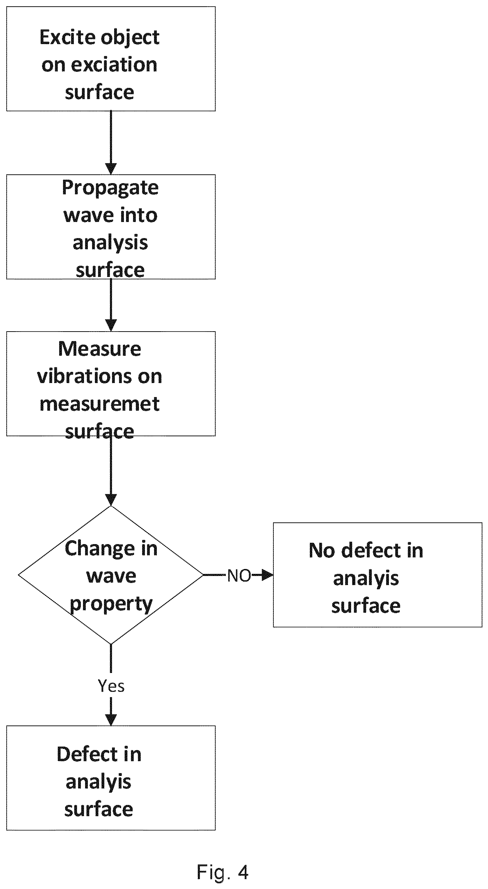

Now with additional reference to Figure 4 showing an exemplary flow chart of method of analysing the object 2.

In a first step, the object 2 is excited at a vibration frequency so as to induce at least one wave, having the vibration frequency, on the excitation surface 12 of the object 2. The excitation surface may comprise a single point or a plurality of points as shown in Figure 3. The plurality of points may be arranged in a line, or a two-dimensional geometrical shape. Exemplary two-dimensional shapes include, but are not limited to squares, rectangles, rhombuses, parallelograms, trapezoids, triangles, and all other kinds of regular and irregular polygons. The plurality of waves may be introduced having different shapes and/or propagation directions, such as Rayleigh-, Lamb- or Love waves. The plurality of waves may be collimated, diverging or converging. The object 2 is excited so as to induce travelling waves. Hence, as a second step, the at least one wave propagate into the analysis surface 13 of the object 2.

In the next step, vibrations are measured on a measurement surface 14 of the object 2. The measurement surface 14 is spatially separated from the excitation surface 12 of the object 2 by the analysis surface 13 of the object. The analysis surface 13 is typically covered by an opaque material or is out of view of the measurement device performing the vibration measurements. The excitations and measurements may be performed at a single frequency or a plurality of frequencies. Furthermore, the excitations and measurements may be performed using in-plane excitation, out-of-plane excitation or a combination of both.

In the next step, the vibration data from the vibration measurements are processed to determine a change in at least one wave property of the at least one wave. A change in the at least one wave property may indicate that the at least one wave has been affected by defects in the analysis surface 13 through which the at least one wave has propagated. One such change in the at least one wave property is that the measured vibration data show a wave having a reduced wave amplitude compared with the induced wave. It is also possible that the measured vibration data show that there is no detectable wave, i.e. the induced wave has been attenuated to a nondetectable level due to the defects in the analysis surface. Another change in the at least one wave property is that the vibration data show a wave that has a non-spherical or non-planar wave-front, contrary to what would have been expected from an object without defects in the analysis surface 13. Another change in the at least one wave property is that the vibration data show a second wave having a second propagation direction different from the propagation direction of the induced wave. That is, the second wave may be a wave reflected from defects in the analysis surface 13.

The analysis surface may not be homogenous and isotropic. The analysis surface 13 may comprise flanges, edges, through holes, etc. creating complex wave-shapes at the measurement surface 14. In those cases, resulting waves may be registered for a similar object without defects, i.e. a calibration object, and the measured vibration data for the object 2 under test, may be compared with registered waves.

In one embodiment this may be performed by first exciting a calibration object at the vibration frequency so as to induce the at least one wave, having the vibration frequency, on an excitation surface of the calibration object. The at least one wave propagates into an analysis surface of the calibration object. The vibration data is measured on a measurement surface of the calibration object, the measurement surface being spatially separated from the excitation surface of the calibration object by the analysis surface of the calibration object. The measurement surface, the excitation surface and the analysis surface of the calibration object should be identical to the objects under test. As discussed above, the processor processes the vibration data to determine a calibrated wave propagation for the calibration object. Then, in the step of determining a change in the at least one wave property of the at least one wave, for the object 2 under test, determining a change in the at least one wave property of the at least one wave comprises comparing the measured wave propagation with the calibrated wave propagation. When they differ, it may be determined that there is a defect in the analysis surface 13 of the object 2.

If no changes in the at least one wave property of the at least one wave is detected, it is determined that no defects exist in the analysis surface.

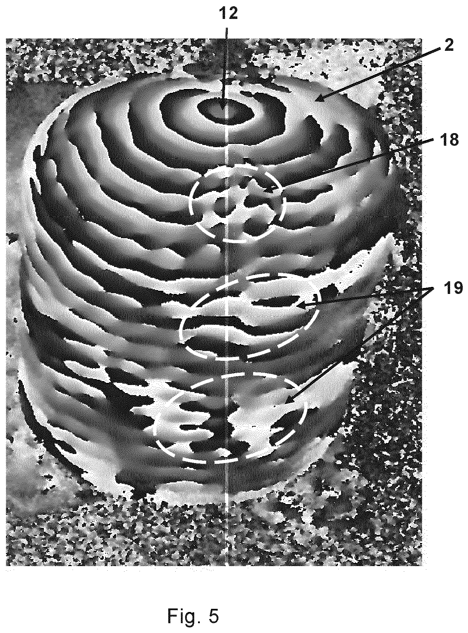

Figure 5 shows an exemplary result of an interferometric analysis of an object according to the present invention. The figure shows a composite container excited at vibration frequency on an excitation surface 12 such that at least one wave has been propagated into the composite container. The surface container has a damaged area, or defect, 18. As mentioned in the prior art section, this defect can be detected directly using the methodology disclosed in WO2019/229473. However, composite containers are usually partially covered by a protecting opaque material, such as hard plastic. If the defect 18 was covered by the opaque material it would not be possible to find the defect using prior art methods. However, as described above, the defect 18 causes changes in the wave property in measurement surface areas 19 that may not be covered by the opaque material. The determination of changes in the wave property in the measurement surfaces 19 determines that at least one defect 18 exists in the analysis surface of the object. In this case, the analysis surface of the object may be any part of the surface covered by the opaque material.

It will be appreciated by those skilled in the art that the invention has been illustrated by describing various specific embodiments thereof, but is not limited to these embodiments; many variations and modifications are possible, within the scope of the accompanying claims.

## Claims

1. A method of analysing an object (2), comprising:
exciting the object (2) at a vibration frequency so as to induce at least one travelling wave, having the vibration frequency, on an excitation surface (12) of the object (2);
propagating the at least one travelling wave into an analysis surface (13) of the object (2);
**characterized by**:
using an optical-interference-based measurement apparatus comprising a camera to acquire vibration data for a plurality of points on a measurement surface (14; 19) of the object (2) from image data output by the camera, the measurement surface (14; 19) being spatially separated from the excitation surface (12) of the object (2) by the analysis surface (13) of the object (2), and the analysis surface (13) being out of view of the measurement apparatus performing the vibration measurements;
processing the vibration data to determine a change in at least one wave property of the at least one travelling wave; and
determining, based on the change in the at least one wave property of the at least one travelling wave, at least one defect (15; 18) existing in the analysis surface (13) of the object (2).

2. The method of claim 1, wherein the change in the at least one wave property of the at least one travelling wave comprises a reduced wave amplitude or no detectable wave.

3. The method of any of the preceding claims, wherein the change in the at least one wave property of the at least one travelling wave comprises a non-spherical or non-planar wave-front within the analysis surface (13).

4. The method of any of the preceding claims, wherein the change in the at least one wave property comprises the vibration data showing a second wave having a second propagation direction different from a propagation direction of the induced wave.

5. The method of claim 1, wherein the method further comprises:
exciting a calibration object at the vibration frequency so as to induce at least one wave, having the vibration frequency, on an excitation surface of the calibration object;
propagating the at least one wave into an analysis surface of the calibration object;
measuring vibration data for a measurement surface of the calibration object, the measurement surface being spatially separated from the excitation surface of the calibration object by the analysis surface of the calibration object; and
processing the vibration data to determine a calibrated wave propagation for the calibration object; and
wherein the change in the at least one wave property of the at least one wave comprises a wave propagation differing from the calibrated wave propagation.

6. The method of any of the preceding claims, comprising exciting the object (2) at a plurality of excitation points on the excitation surface (12) in a phased-controlled relation so as to create a phased array of excitation points.

7. The method of claim 6, wherein the plurality of excitation points is arranged in a line, or a two-dimensional geometrical shape.

8. The method of any of the preceding claims, wherein the method further comprises introducing a plurality of waves having different shapes and/or propagation directions.

9. The method of claim 8, wherein the plurality of waves is collimated, diverging or converging.

10. The method of any of the preceding claims, wherein the excitation is performed at a plurality of frequencies.

11. The method of any of the preceding claims, wherein the excitation is performed using in-plane excitation, out-of-plane excitation or a combination of both.

12. The method of any of the preceding claims, wherein the measuring vibration data comprises measuring an amplitude and a phase.

13. The method of any of the preceding claims, comprising using electronic speckle pattern interferometry (ESPI) or electronic shearography to determine the vibration data.

14. The method of any of the preceding claims, wherein at least a part of the analysis surface (13) of the object (2) is covered by an opaque material.

15. A system (1) for analysing an object (2), comprising:
an exciter (3) adapted to excite the object (2) at a vibration frequency so as to induce at least one travelling wave, having the vibration frequency, on an excitation surface (12) of the object (2), such that the at least one travelling wave is propagated into an analysis surface (13) of the object (2);
**characterized by**:
an optical-interference-based measurement apparatus comprising a camera, and adapted to acquire vibration data for a plurality of points on a measurement surface (14; 19) of the object (2) from image data output by the camera, the measurement surface (14; 19) being spatially separated from the excitation surface (12) of the object (2) by the analysis surface (13) of the object (2) and the analysis surface (13) being out of view of the measurement apparatus performing the vibration measurements;
a processing device (4) adapted to determine a change in at least one property of the at least one travelling wave; and
to determine, based on the change in the at least one wave property of the at least one travelling wave, at least one defect (15; 18) existing in the analysis surface (13) of the object (2).

## Patentansprüche

1. Verfahren zum Analysieren eines Objekts (2), umfassend:
Anregen des Objekts (2) mit einer Schwingungsfrequenz, um mindestens eine Wanderwelle, welche die Schwingungsfrequenz aufweist, auf einer Anregungsoberfläche (12) des Objekts (2) zu induzieren;
Ausbreiten der mindestens einen Wanderwelle in eine Analyseoberfläche (13) des Objekts (2);
**gekennzeichnet durch**:
Verwenden einer optisch-interferenzbasierten Einrichtung, die eine Kamera umfasst, um Schwingungsdaten für eine Vielzahl von Punkten auf einer Messoberfläche (14; 19) des Objekts (2) aus von der Kamera ausgegebenen Bilddaten zu erfassen, wobei die Messoberfläche (14; 19) räumlich durch die Analyseoberfläche (13) des Objekts (2) von der Anregungsoberfläche (12) des Objekts (2) getrennt ist, und wobei die Analyseoberfläche (13) nicht in Sichtweite der Messeinrichtung ist, welche die Schwingungsmessungen durchführt;
Verarbeiten der Schwingungsdaten, um eine Änderung in mindestens einer Welleneigenschaft der mindestens einen Wanderwelle zu bestimmen; und
Bestimmen, auf der Grundlage der Änderung der mindestens einen Welleneigenschaft der mindestens einen Wanderwelle, von mindestens einem in der Analyseoberfläche (13) des Objekts (2) vorhandenen Defekt (15; 18).

2. Verfahren nach Anspruch 1, wobei die Änderung der mindestens einen Welleneigenschaft der mindestens einen Wanderwelle eine reduzierte Wellenamplitude oder keine erkennbare Welle umfasst.

3. Verfahren nach einem der vorstehenden Ansprüche, wobei die Änderung der mindestens einen Welleneigenschaft der mindestens einen Wanderwelle eine nicht kugelförmige oder nicht planare Wellenfront innerhalb der Analyseoberfläche (13) umfasst.

4. Verfahren nach einem der vorstehenden Ansprüche, wobei die Änderung der mindestens einen Welleneigenschaft die Schwingungsdaten umfasst, die eine zweite Welle zeigen, welche eine zweite Ausbreitungsrichtung aufweist, die sich von einer Ausbreitungsrichtung der induzierten Welle unterscheidet.

5. Verfahren nach Anspruch 1, wobei das Verfahren weiter Folgendes umfasst:
Anregen eines Kalibrierobjekts mit der Schwingungsfrequenz, um mindestens eine Welle, welche die Schwingungsfrequenz aufweist, auf einer Anregungsoberfläche des Kalibrierobjekts zu induzieren;
Ausbreiten der mindestens einen Welle in eine Analyseoberfläche des Kalibrierobjekts;
Messen von Schwingungsdaten für eine Messoberfläche des Kalibrierobjekts, wobei die Messoberfläche durch die Analyseoberfläche des Kalibrierobjekts räumlich von der Anregungsoberfläche des Kalibrierobjekts getrennt ist; und
Verarbeiten der Schwingungsdaten, um eine kalibrierte Wellenausbreitung für das Kalibrierobjekt zu bestimmen; und
wobei die Änderung der mindestens einen Welleneigenschaft der mindestens einen Welle eine Wellenausbreitung umfasst, die sich von der kalibrierten Wellenausbreitung unterscheidet.

6. Verfahren nach einem der vorstehenden Ansprüche, umfassend das Anregen des Objekts (2) an einer Vielzahl von Anregungspunkten auf der Anregungsoberfläche (12) in einer stufenweise gesteuerten Beziehung, um eine stufenweise Anordnung von Anregungspunkten zu erzeugen.

7. Verfahren nach Anspruch 6, wobei die Vielzahl von Anregungspunkten in einer Linie oder einer zweidimensionalen geometrischen Form angeordnet ist.

8. Verfahren nach einem der vorstehenden Ansprüche, wobei das Verfahren weiter das Einführen einer Vielzahl von Wellen umfasst, die unterschiedliche Formen und/oder Ausbreitungsrichtungen aufweisen.

9. Verfahren nach Anspruch 8, wobei die Vielzahl von Wellen kollimiert, auseinanderlaufend oder zusammenlaufend ist.

10. Verfahren nach einem der vorstehenden Ansprüche, wobei die Anregung bei einer Vielzahl von Frequenzen durchgeführt wird.

11. Verfahren nach einem der vorstehenden Ansprüche, wobei die Anregung unter Verwendung von In-Plane-Anregung, Out-of-Plane-Anregung oder einer Kombination aus beiden durchgeführt wird.

12. Verfahren nach einem der vorstehenden Ansprüche, wobei das Messen von Schwingungsdaten Messen einer Amplitude und einer Phase umfasst.

13. Verfahren nach einem der vorstehenden Ansprüche, umfassend das Verwenden von elektronischer Speckle-Muster-Interferometrie (ESPI) oder elektronischer Shearografie zum Bestimmen der Schwingungsdaten.

14. Verfahren nach einem der vorstehenden Ansprüche, wobei mindestens ein Teil der Analyseoberfläche (13) des Objekts (2) durch ein opakes Material abgedeckt ist.

15. System (1) zum Analysieren eines Objekts (2), umfassend:
einen Anreger (3), der angepasst ist, um das Objekt (2) mit einer Schwingungsfrequenz anzuregen, um mindestens eine Wanderwelle, welche die Schwingungsfrequenz aufweist, auf einer Anregungsoberfläche (12) des Objekts (2) zu induzieren, sodass die mindestens eine Wanderwelle in eine Analyseoberfläche (13) des Objekts (2) ausgebreitet wird;
**gekennzeichnet durch**:
eine auf optischen Interferenzen basierende Messeinrichtung, eine Kamera umfassend, und angepasst, um Schwingungsdaten für eine Vielzahl von Punkten auf einer Messoberfläche (14; 19) des Objekts (2) aus von der Kamera ausgegebenen Bilddaten zu erfassen, wobei die Messoberfläche (14; 19) räumlich von der Anregungsoberfläche (12) des Objekts (2) durch die Analyseoberfläche (13) des Objekts (2) getrennt, und die Analyseoberfläche (13) nicht in Sichtweite der Messeinrichtung ist, welche die Schwingungsmessungen durchführt;
eine Verarbeitungsvorrichtung (4), die angepasst ist, um eine Änderung mindestens einer Eigenschaft der mindestens einen Wanderwelle zu bestimmen; und
um auf der Grundlage der Änderung der mindestens einen Welleneigenschaft der wenigstens einen Wanderwelle mindestens einen in der Analyseoberfläche (13) des Objekts (2) vorhandenen Defekt (15; 18) zu bestimmen.

## Revendications

1. Procédé d'analyse d'un objet (2), comprenant :
l'excitation de l'objet (2) à une fréquence de vibration de manière à induire au moins une onde progressive, présentant la fréquence de vibration, sur une surface d'excitation (12) de l'objet (2) ;
la propagation de l'au moins une onde progressive dans une surface d'analyse (13) de l'objet (2) ;
**caractérisé par** :
l'utilisation d'un appareil de mesure basé sur l'interférence optique comprenant une caméra pour acquérir des données de vibration pour une pluralité de points sur une surface de mesure (14 ; 19) de l'objet (2) à partir de données d'image délivrées en sortie par la caméra, la surface de mesure (14 ; 19) étant séparée spatialement de la surface d'excitation (12) de l'objet (2) par la surface d'analyse (13) de l'objet (2), et la surface d'analyse (13) étant hors du champ de vision de l'appareil de mesure effectuant les mesures de vibration ;
le traitement des données de vibration pour déterminer une modification d'au moins une propriété d'onde de l'au moins une onde progressive ; et
la détermination, sur la base de la modification de l'au moins une propriété d'onde de l'au moins une onde progressive, d'au moins un défaut (15 ; 18) existant dans la surface d'analyse (13) de l'objet (2).

2. Procédé selon la revendication 1, dans lequel la modification de l'au moins une propriété d'onde de l'au moins une onde progressive comprend une amplitude d'onde réduite ou aucune onde détectable.

3. Procédé selon l'une quelconque des revendications précédentes, dans lequel la modification de l'au moins une propriété d'onde de l'au moins une onde progressive comprend un front d'onde non sphérique ou non plan à l'intérieur de la surface d'analyse (13).

4. Procédé selon l'une quelconque des revendications précédentes, dans lequel la modification de l'au moins une propriété d'onde comprend les données de vibration présentant une deuxième onde présentant une deuxième direction de propagation différente d'une direction de propagation de l'onde induite.

5. Procédé selon la revendication 1, dans lequel le procédé comprend en outre :
l'excitation d'un objet d'étalonnage à la fréquence de vibration de manière à induire au moins une onde, présentant la fréquence de vibration, sur une surface d'excitation de l'objet d'étalonnage ;
la propagation de l'au moins une onde dans une surface d'analyse de l'objet d'étalonnage ;
la mesure de données de vibration pour une surface de mesure de l'objet d'étalonnage, la surface de mesure étant séparée spatialement de la surface d'excitation de l'objet d'étalonnage par la surface d'analyse de l'objet d'étalonnage ; et
le traitement des données de vibration pour déterminer une propagation d'onde étalonnée pour l'objet d'étalonnage ; et
dans lequel la modification de l'au moins une propriété d'onde de l'au moins une onde comprend une propagation d'onde différente de la propagation d'onde étalonnée.

6. Procédé selon l'une quelconque des revendications précédentes, comprenant l'excitation de l'objet (2) en une pluralité de points d'excitation sur la surface d'excitation (12) selon une relation à phases commandées de manière à créer un réseau phasé de points d'excitation.

7. Procédé selon la revendication 6, dans lequel la pluralité de points d'excitation sont agencés en ligne, ou selon une forme géométrique bidimensionnelle.

8. Procédé selon l'une quelconque des revendications précédentes, dans lequel le procédé comprend en outre l'introduction d'une pluralité d'ondes présentant différentes formes et/ou directions de propagation.

9. Procédé selon la revendication 8, dans lequel la pluralité d'ondes sont collimatées, divergentes ou convergentes.

10. Procédé selon l'une quelconque des revendications précédentes, dans lequel l'excitation est effectuée à une pluralité de fréquences.

11. Procédé selon l'une quelconque des revendications précédentes, dans lequel l'excitation est effectuée en utilisant une excitation dans le plan, une excitation hors plan ou une combinaison des deux.

12. Procédé selon l'une quelconque des revendications précédentes, dans lequel les données de mesure de vibration comprennent la mesure d'une amplitude et d'une phase.

13. Procédé selon l'une quelconque des revendications précédentes, comprenant l'utilisation de l'interférométrie électronique de speckle (ESPI) ou de la shearographie électronique pour déterminer les données de vibration.

14. Procédé selon l'une quelconque des revendications précédentes, dans lequel au moins une partie de la surface d'analyse (13) de l'objet (2) est recouverte par un matériau opaque.

15. Système (1) d'analyse d'un objet (2), comprenant :
un excitateur (3) adapté pour exciter l'objet (2) à une fréquence de vibration de manière à induire au moins une onde progressive, présentant la fréquence de vibration, sur une surface d'excitation (12) de l'objet (2), de sorte que l'au moins une onde progressive soit propagée dans une surface d'analyse (13) de l'objet (2) ;
**caractérisé par** :
un appareil de mesure basé sur l'interférence optique comprenant une caméra, et adapté pour acquérir des données de vibration pour une pluralité de points sur une surface de mesure (14 ; 19) de l'objet (2) à partir de données d'image délivrées en sortie par la caméra, la surface de mesure (14 ; 19) étant séparée spatialement de la surface d'excitation (12) de l'objet (2) par la surface d'analyse (13) de l'objet (2) et la surface d'analyse (13) étant hors du champ de vision de l'appareil de mesure effectuant les mesures de vibration ;
un dispositif de traitement (4) adapté pour déterminer une modification d'au moins une propriété de l'au moins une onde progressive ; et
pour déterminer, sur la base de la modification de l'au moins une propriété d'onde de l'au moins une onde progressive, au moins un défaut (15 ; 18) existant dans la surface d'analyse (13) de l'objet (2).
